# EUROPEAN PATENT SPECIFICATION

(11) **EP 4 099 194 B1**
(45) Date of publication and mention of the grant of the patent: **19.11.2025**
(21) Application number: 20931413.7
(22) Date of filing: 28.07.2020
(51) Int. Cl.: G06F 21/12, G06F 21/64, G06F 9/445

(54) **PROGRAM IMPLEMENTATION METHOD AND SYSTEM CAPABLE OF SEPARATING CODE AND CONFIGURATION DATA**
PROGRAMMIMPLEMENTIERUNGSVERFAHREN UND -SYSTEM, DAS IN DER LAGE IST, CODE UND KONFIGURATIONSDATEN ZU TRENNEN
PROCÉDÉ ET SYSTÈME D'IMPLÉMENTATION DE PROGRAMME APTE À SÉPARER DES DONNÉES DE CODE ET DE CONFIGURATION

(30) Priority: 17.04.2020 CN 202010302845
(43) Date of publication of application: 07.12.2022
(73) Proprietor: CRSC Research & Design Institute Group Co., Ltd., Beijing 100070 (CN)
(72) Inventor: HU, Rui, Beijing 100070 (CN); ZHANG, Lifeng, Beijing 100070 (CN); ZHOU, Jie, Beijing 100070 (CN)
(74) Representative: Huang, Liwei
(86) International application number: PCT/CN2020/105003
(87) International publication number: WO 2021/208288

(56) References cited:
- CN-A- 101 909 314
- CN-A- 101 909 314
- CN-A- 107 203 407
- CN-A- 109 408 103
- CN-A- 111 209 545
- US-A1- 2015 100 948
- US-A1- 2016 042 285
- US-B1- 8 276 133

## Description

### CROSS-REFERENCE TO RELATED APPLICATIONS

This application claims priority from Chinese Patent Application No. 202010302845.1 filed on April 17, 2020.

### TECHNICAL FIELD

The present disclosure relates to the field of software application technologies, and in particular to a program implementation method and system by separating code and configuration data.

### BACKGROUND ART

In recent years, with the development of rail transit technology, the rail transit industry of China embraces a broader market opportunity. As the ground core system of railway signal control, the interlock system is indispensable in passenger railways, freight railways, and urban rail transit for various countries, and therefore the overseas interlock market has a huge space. With the continuous advancement of overseas business in the rail transit industry, how to use existing resources to quickly and effectively develop signaling products that meet the needs of different customers has become an important issue for project development and improvement.

The computer interlock system is one of the key systems to perform the interlock logic control function of the station and ensure the driving safety. The computer core interlock software is an important part of the computer interlock system, and mainly includes the core interlock logic and the station yard configuration data. The configuration data of the existing interlock system is configured manually, and is stored in the .c source file and the .h header file in the form of constant global variables and macro definitions. According to different factors such as the project application environments, the engineering data configuration personnel modifies the configuration data of interlock project in the formats of the.c source file and .h header file. The software program (mainly including logic code) of the interlock system and the configuration data are bound and compiled into an executable file, which is installed in the CF card. The configuration data in this configuration mode is readable. Even if the logic code and the station data are stored separately, the two are still integrated and exist as a whole project. In this case, when the data changes, the interlock program needs to be connected to the configuration file in the recompilation process before it can be used. This reduces the generality of the software to some extent, and is not conducive to the confidentiality of the core code. Further, in the process of configuring the data, it is quite likely that the interlock core logic code is modified incorrectly. Prior art document US8276133B1 relates to optimizing application operation for a system. Prior art document CN101909314A relates to a method and system for configuring parameters of a base station. The present invention is defined by the subject matter of the appended set of claims.

### SUMMARY

To resolve the foregoing problem, the present disclosure provides a program implementation method by separating code and configuration data, including:
setting a global variable of a program in code to a non-constant;
storing configuration data corresponding to the global variable in a configuration file; and
assigning a value to the global variable according to the configuration data in the configuration file when the program is executed.

Further, the code is interlock logic code; and
the configuration data includes station-related information and/or project implementation information.

Further, the method includes:
pre-setting a global variable occupation space.

Further, according to running requirements of the program in different environments, the global variable occupation space is set to a maximum space meeting the environment requirements.

Further, the global variable occupation space is set by setting an internal macro definition in the program.

Further, the method includes:
detecting the global variable in a process of running the program, to determine whether the global variable has been changed.

Further, the method includes:
calculating a check code according to the global variable during initialization of the program and saving the check code; and
in the process of running the program, recalculating the check code of the global variable, and comparing the recalculated check code with the saved check code, to determine whether the global variable has been changed.

Further, an initialized global variable storage region is partitioned, and a check code of each partition is calculated and saved;
and in the process of running the program, a check code of a designated partition of the global variable is recalculated, and the recalculated check code is compared with a corresponding saved check code, to determine whether the global variable has been changed.

Further, the method includes:
storing the configuration data in the configuration file in a binary stream manner.

Further, the method includes:
generating a check code for the configuration file and saving the check code in the code;
and obtaining the configuration file when the program is run, and checking the configuration file according to the saved check code.

Further, the method includes:
encrypting the configuration file, and saving a corresponding secret key in the code;
and obtaining the configuration file when the program is run, and decrypting the configuration file according to the saved secret key.

Further, the method includes: storing the configuration data by configuring a sub-partition, where the sub-partition includes a sub-partition length and a sub-partition type field.

Further, the method includes:
editing, by a visual editing terminal, the configuration data, to generate a binary configuration file, where
the visual editing terminal is further configured to convert the configuration file of the binary stream into visual configuration data.

The present disclosure further provides a program implementation system by separating code and configuration data, including:
a variable setting unit configured to set a global variable of a program in code to a non-constant;
a variable configuration unit configured to store configuration data corresponding to the global variable in a configuration file; and
a variable assignment unit configured to assign a value to the global variable according to the configuration data in the configuration file when the program is executed.

Further, the code is interlock logic code; and
the configuration data includes station-related information and/or project implementation information.

The variable setting unit is further configured to preset a global variable occupation space; and specifically, to
set, according to running requirements of the program in different environments, the global variable occupation space to a maximum space meeting the environment requirements.

Further, the system includes:
a variable detection unit configured to detect the global variable in a process of running the program, to determine whether the global variable has been changed.

Further, the variable detection unit is configured to:
calculate a check code according to the global variable during initialization of the program and save the check code; and
in the process of running the program, recalculate the check code of the global variable, and compare the recalculated check code with the saved check code, to determine whether the global variable has been changed.

In the present disclosure, the program implementation method and system for separating the core logic code of the program from configuration data change the existing data configuration manner, to separate the configuration data from the software code. Therefore, the software code is compiled without the configuration file, thereby separating core processing logic code from the data configuration file, and improving the confidentiality of program code. When the program runs, a value is assigned to the global variable according to the configuration file, and a plurality of configuration files can be adapted based on a set of code, such that the program runs in different environments, thereby enhancing the generality of the software code. This, to a great extent, overcomes the shortcomings of the integration of the logic code and data.

In the method and system of the present disclosure, the global variables are checked in the process of running the program, thereby ensuring that the non-static global variables are not modified by mistake, and improving the security.

The separated code and configuration file further ensure that the initialized data of the software program is inputted correctly through the verification mechanism and the encryption mechanism.

Other features and advantages of the present disclosure are described in the specification, and some of them are apparent from the description, or may be learned by practice of the present disclosure. The objectives and other advantages of the present disclosure may be implemented and obtained by using the structure described in the specification, claims, and drawings.

### BRIEF DESCRIPTION OF THE DRAWINGS

To describe the technical solutions in the embodiments of the present disclosure or in the prior art more clearly, the following briefly describes the drawings required for describing the embodiments or the prior art. Apparently, the drawings in the following description show some embodiments of the present disclosure, and a person of ordinary skill in the art may still derive other drawings from these drawings without creative efforts.
FIG.1 is a schematic diagram of separating interlock logic code from configuration data according to an embodiment of the present disclosure.
FIG. 2 is a schematic diagram of calculating a check code of a global variable partition according to an embodiment of the present disclosure.
FIG. 3 is a schematic structural diagram of a program implementation system by separating code and configuration data according to an embodiment of the present disclosure.

### DETAILED DESCRIPTION

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are some rather than all of the embodiments of the present disclosure. Based on the embodiments of the present disclosure, all the other embodiments obtained by those of ordinary skill in the art without creative effort shall fall within the scope of the present disclosure.

The present disclosure provides a program implementation method by separating code and configuration data. In the embodiments of the present disclosure, description is made by using a rail transit interlocking system as an example, but the embodiments are not limited thereto. The method is described through a process from development to application of the interlock system.

In the embodiments of the present disclosure, the process includes the following steps:
Step 1: Write program code.
Step 2: Generate a configuration file of configuration data
Step 3: Run a program based on the configuration file and the program code.

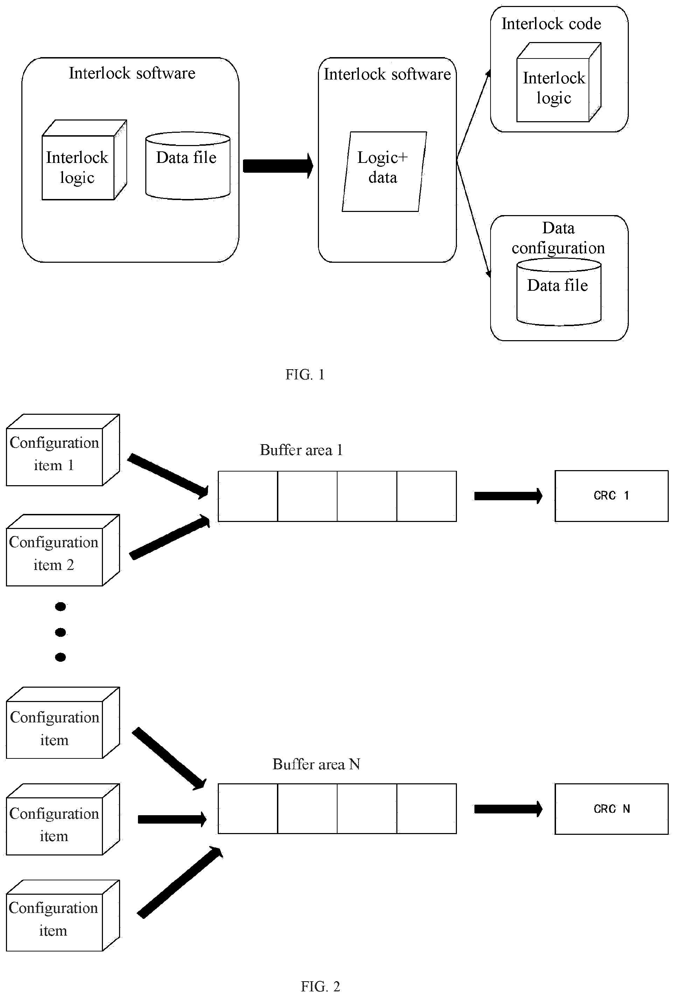

In the embodiments of the present disclosure, the order in which the steps are performed is not strictly limited, and the sequence numbers of the steps are only for convenience of reference and description. Step 2 and step 1 may be performed simultaneously. As shown in FIG. 1, the program code of the interlock software is separated from the configuration file that stores configuration data such as station information, and they may be developed independently. The software code is compiled without the configuration file, which forms an independent binary file, to interlock logic. In other words, the program code reads the external configuration data in the software initialization stage through the API interface function, such that the interlock logic can use the station yard data normally. The improvement of the present disclosure is described in detail below with reference to the implementation principle of the interlock system in the prior art.

In the prior art, the configuration data is directly associated with the interlock software code, and they belong to a project. The configuration data is directly used in the project compilation phase. The configuration data exists in two forms: macro definitions and const type (constant) global variables. The macro definition is a batch processing manner, which replaces a text pattern according to a series of predefined rules. When an interpreter or compiler encounters a macro, it automatically replaces this pattern. For compiled languages, macro expansion occurs during the compiling, and the tool that performs macro expansion is usually referred to as a macro expander. The configuration items implemented by the macro definitions in the interlock system can be classified into two types: the internal configuration macro definition and the external configuration macro definition. The internal configuration macro definition is modified by a developer, mainly to check the legality of the data length or content. The external configuration macro definition is modified by the engineering data configuration personnel, and includes the station-related information, project implementation information, and the like. The const-type global variables are modified completely by the engineering data configuration personnel. Because the const-type variable is constant and immutable during operation, it is directly assigned with a value according to the configuration data during the compiling. The configuration file is directly bound to the code data.

Step 1 includes step 1-1: Set a global variable of a program in code to a non-constant. To separate the code from data configuration file, the external configuration macro definition in the existing configuration data is converted into a non-const type global variable, and the const-type global variable is converted into a non-const type global variable, thereby supporting assignment during the running, without relying on the configuration file during the compiling. After the configuration file is read, values are assigned to these data configuration global variables, such that the code supports the data configuration function.

Step 1 includes step 1-2: Pre-set a non-constant (that is, the non-const type) global variable occupation space. The interlock program reserves the data configuration global variable, which is defined as the non-const type to read the configuration file. To ensure the normal operation of interlock stations with different sizes, according to running requirements of the program in different environments, the interlock program sets the global variable occupation space to a maximum space meeting the environment requirements. The space occupied by the reserved configuration data global variables should be slightly larger than the size of the configuration data required by the largest engineering station. By setting the reserved space, the same set of interlock code can meet the construction parameter requirements in different occasions, to improve the market competitiveness of the system and shorten the development period. Specifically, the global variable occupation space is set by setting an internal macro definition in the program. Taking the data configuration global variable of the array type as an example, the size of the pre-storing array space is defined through the internal configuration macro definition. This macro definition is used to check validity of the data size obtained by reading the data configuration file to prevent out-of-bounds assignment of the pre-storing array space. The global variable occupation space is set by means of internal macro definition, which, on the one hand, externally provides a variable and diversified configuration data receiving method within a specific range, and on the other hand, provides support for the safe execution inside the interlock program.

Step 2 includes step 2-1: Store configuration data corresponding to the global variable in a configuration file.

Considering the generality and operability of different platforms, the configuration data is stored in the configuration file in a binary stream manner. The configuration file of the binary stream is convenient for the program to read directly without relying on third-party software, such that it is convenient to call the configuration file and debug the software code on the PC side when the program is running. To ensure the correctness, integrity and availability of configuration data storage, processing and transmission, a checking mechanism is provided for the configuration file. Specifically, a check code is generated for the configuration file and then is saved in the code. The configuration file is obtained when the program is run, and the configuration file is checked according to the check code saved in the code. In the embodiment of the present disclosure, the saving the check code in the code means that the check code is saved in a software project separated from the configuration file, and the code may be a specific file for writing program execution logic or a header file associated with the code. That "when the program is run" in the embodiment of the present disclosure refers to that when a configuration file needs to be called to assign a value to a global variable when the program code is compiled or executed. In the embodiment of the present disclosure, a 32-bit CRC is used to check the integrity of the configuration data.

Further, the configuration data is stored by configuring a sub-partition, and the sub-partition includes a sub-partition length and a sub-partition type field, which facilitates the addition and modification of configuration items in different engineering application scenarios. The sub-partition further includes a partition data field for storing actual application data. The partition data field is stored in bytes, using unsigned 8-bit, 16-bit, and 32-bit integer data types. For the configuration items that need to be identified through enumeration types in the interlock program, the unsigned 8-bit integer data, 16-bit integer data, and 32-bit integer data corresponding to the values of the enumeration variables are stored in the configuration file. For example, the equipment type, specific equipment ID, configuration data version, etc. are recorded in the configuration file for use in configuration auditing.

The format of the configuration file before encryption is as follows:

**[Table 0001]**

| Byte length | Configuration domain meaning |
|---|---|
| 4 | Configuration data length |
| Variable | Configuration partition 0 |
| Variable | Configuration partition 1 |
| ... | ... |
| Variable | Configuration partition N |
| 4 | 32-bit CRC |

Each configuration partition may include a plurality of configuration items, and the format of each configuration partition is as follows:

| Byte length | Configuration domain meaning |
|---|---|
| 2 | Configuration partition length |
| 2 | Configuration partition type (0-0xffff) |
| Variable | Configuration partition data |

The configuration partition 0 is fixed to record information such as the equipment type, specific equipment ID, and configuration data version. The format is as follows:

**[Table 0002]**

| Byte length | Configuration domain meaning |
|---|---|
| 2 | Configuration partition length |
| 2 | Configuration partition type (0) |
| 2 | Equipment Type (CI) |
| 4 | Specific equipment ID (interlock ID) |
| 4 | Configuration data version |

The configuration data mainly includes single-variable-type configuration data and array-type configuration data. The single-variable-type configuration data includes: project implementation information, such as system inherent information (a system cycle duration, a data version, and the like), various timeout counter thresholds, different project implementation manners, and station-related information, such as a lot of I/O and communication interface equipment in the station. The array-type configuration data includes a lot of I/O and communication interface equipment with a same data structure and internal logic processing elements.

In the single-variable-type configuration data, each configuration item occupies a small space, and data, such as various timeout counter thresholds, with similar attributes, may be stored in a configuration partition.

In the array-type configuration data, using a structure array as a unit, each structure array is stored in an independent configuration partition.

The nested inclusions of array types of configuration data are as follows:

```
     typedef struct- which represents a defined structure
     {
     int element; -which represents an int (integer) data element included in a structure A
     }STRUCT_A; - which means a structure name
     typedef struct
     {
     STRUCT_A pstA[SIZE_A]; which means that a structure B includes an array with the
 structure A as an element
     } STRUCT_B;
     typedef struct
     {
     STRUCT_B pstB[SIZE_B]; - which means that a structure C includes an array with the
 structure B as an element
     }STRUCT_C;
     STRUCT_C pstC[SIZE_C]; which represents an array-type variable of the structure C.
```

In the configuration file, the configuration item descriptions of SIZE_A (a sub-region length of A), SIZE_B (a sub-region length of B), and SIZE_C (a sub-region length of C) must precede the configuration item description of the array pstC to ensure that the configuration item description of pstC can be read according to the correct quantity of data elements. That is, the length of the included element can be determined only after the length of the including element is determined.

In the embodiment of the present disclosure, the data configuration file is stored in a binary stream file of the dat type, which is convenient for the program to read. However, the binary stream file cannot be directly edited visually by a common text editor, such as a txt editor, and the binary stream is not readable for human. Therefore, to facilitate reading configuration data of the configuration file, a visual tool is provided. A visual editing terminal edits the configuration data, to generate a binary configuration file. The visual editing terminal is further configured to convert the configuration file of the binary stream into visual configuration data, that is, into text readable for human. Further, the visual editing terminal is further configured to perform CRC calculation and encryption on the configuration file. If a value range of specific configuration item data is limited (numerical constraining, enumeration valuing, and the like), the visual editing terminal has corresponding input protection to avoid unreasonable data inputs. Preferably, the global variable in the interlock code and the configuration data of the configuration file are in a completely consistent data format.

The visual editing terminal edits a binary stream file, which facilitates providing a standard and easy-to-use data editing operation, thereby improving the security of the configuration file, and avoiding the problem of incorrect modification caused by using text. The visual editing terminal can further automatically generate interlock application-related data based on graphics, interlock tables, mining and driving tables of different stations, and the like, which is beneficial to data changes and system maintenance in project implementation.

Step 2 further includes step 2-2: Encrypt the configuration file, and save a corresponding secret key in the code; and obtain the configuration file when the program is run, and decrypt the configuration file according to the saved secret key. The encryption process may be implemented by the foregoing visual editing terminal.

Step 3 includes step 3-1: Assign a value to the global variable according to the configuration data in the configuration file when the program is executed. The specific steps are as follows:
(1) Decrypt the configuration file by using the key saved in the software code.
(2) Check integrity and legality of data in the configuration file, where it is checked whether the configuration data is integral through CRC check.
(3) According to the data format of the configuration file, extract each configuration item required by the interlock program, and in the extracting process, check whether the required configuration data is integral and legal. In the configuration file, the data structure definition in the interlock software must be in the same data format as that of the data configuration assistant tool.

In steps (1), (2), and (3), if the expected configuration file cannot be read, or it is found that the configuration file is incomplete and illegal, the interlock program carries out corresponding safety processing, such as downtime processing.

The interlock program provides a corresponding error warning function for the read configuration file. For wrong configuration items, prompt warning information should be outputted to indicate the type and position of configuration error for reference by engineering data configuration personnel.

(4) After the configuration data is successfully acquired, assign a value to a non-static corresponding global variable according to the configuration data.

(5) Calculate a check code of the global variable and store it, such that the global variable is checked in a process of running a subsequent program. Specifically, a check code is calculated according to the global variable during initialization of the program and saved. In the embodiment of the present disclosure, a 32-bit CRC check code is calculated for the global variable stored in a buffer area. Further, an initialized global variable storage region may be partitioned, and a check code of each sub-region is calculated and saved. In the system initialization process, after reading the configuration file, the interlock program saves each configuration item in different global variables, and divides a plurality of configuration items into sub-regions according to the size of the occupied space. As shown in FIG. 2, the configuration items included in each sub-region are assembled into a continuous buffer, and then the 32-bit CRC check code of each sub-region is calculated and saved.

Step 3 further includes step 3-2: Detect the global variable in a process of running the program, to determine whether the global variable has been changed. Because the global variable corresponding to the configuration data in the interlock code is of non-const type, during the program execution, it is allowed to read and write the global variable. But in practice, these variables should not be modified during execution according to the interlock function requirement to prevent errors. That is, after these global variables are assigned as configuration data during the initialization process, they can no longer be written to other values by using other code. To prevent wrong values from being assigned to the data configuration global variables during a cycle of program execution, it is necessary to periodically check the values
of data configuration global variables. If it is found that the value of the data configuration global variable has changed, safety processing should be performed.

Then, during the periodic running of the interlock program, the check code is recalculated according to the global variable, and the recalculated check code is compared with the saved check code to determine whether the global variable has changed. Further, when the global variable check code is calculated by using the sub-region in the initialization process, a check code of a designated sub-region of the global variable is recalculated according to the system load. The recalculated check code is compared with a corresponding saved check code, to determine whether the global variable has been changed. CRC calculation is selectively performed on all or some configuration item sub-partitions to obtain values. The value is compared with the CRC value obtained during the initialization. If the two values are different, it is indicated that the value of the configuration data global variable included in the sub-partition of this configuration item has changed, and then downtime processing is performed. By periodically checking whether global variables have changed, global variables that originally need to be defined in a constant manner can be safely used in a non-constant manner. In addition, the check code is calculated by using the partition, such that the designated partition can be selected for calculation according to the system execution situation, avoiding partitioning and calculating a large quantity of global variables and affecting the system performance, and parallel calculation on a plurality of partitions can be performed.

In the program implementation method provided by the embodiments of the present disclosure, the configuration data is separated from the interlock logic to form two independent parts. The configuration file is a binary dat file, and the interlock core processing logic code is compiled to obtain an executable exe file, which are convenient for independent editing, prevent the software code from being mistakenly modified during data configuration, and improve the confidentiality of the software code to some extent. After the interlock code is separated from the configuration data, the interlock code and the configuration data are released separately. The pieces of interlock code of different stations can be completely consistent, and therefore only one version of the code is released. This enhances the generality of the software. This solution of separating logic code from application data can not only be applied to interlock software, but also applicable to other systems with similar common logic and more data changes.

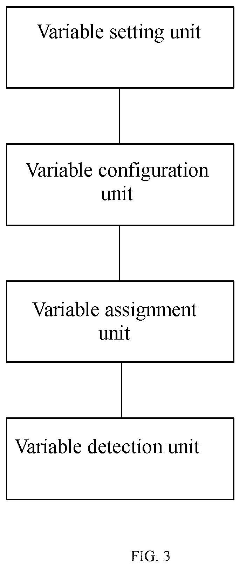

As shown in FIG. 3, based on the same invention concept, the embodiments of the present disclosure further provide a program implementation system by separating code and configuration data, including:
a variable setting unit configured to set a global variable of a program in code to a non-constant, where the code is interlock logic code; and
a variable configuration unit configured to store configuration data corresponding to the global variable in a configuration file; where the configuration data includes station-related information and/or project implementation information. The configuration data is stored in the configuration file in a binary stream manner. Further, the configuration data is stored by configuring a sub-partition, where the sub-partition includes a sub-partition length and a sub-partition type field.

The system further includes: a variable assignment unit configured to assign a value to the global variable according to the configuration data in the configuration file when the program is executed; and
a variable detection unit configured to detect the global variable in a process of running the program, to determine whether the global variable has been changed. Specifically, the variable detection unit is configured to calculate a check code according to the global variable obtained by the variable assignment unit during initialization of the program and save the check code; and in the process of running the program, recalculate the check code of the global variable, and compare the recalculated check code with the saved check code, to determine whether the global variable has been changed. Further, an initialized global variable storage region is partitioned, and a check code of each partition is calculated and saved; and in the process of running the program, a check code of a designated partition of the global variable is recalculated, and the recalculated check code is compared with a corresponding saved check code, to determine whether the global variable has been changed. In the embodiments of the present disclosure, the detection on the global variables in the running process can ensure that the non-static global variables are not modified, thereby improving the security of the system.

The variable setting unit is further configured to preset a global variable occupation space, and specifically, to set, according to running requirements of the program in different environments, the global variable occupation space to a maximum space meeting the environment requirements. By presetting the maximum space, the assignment of global variables at runtime can be satisfied, thereby ensuring an enough space during the assigning on the global variables in a set of code through various corresponding configuration files in various usage environments.

In the embodiments of the present disclosure, the variable setting unit sets the global variable occupation space by setting an internal macro definition in the program.

Further, the variable configuration unit generates a check code for the configuration file. The variable setting unit saves the generated check code in the code. The variable assignment unit obtains the configuration file when the program is run. The configuration file is checked according to the saved check code. By using the check code of the configuration file, the configuration file can be checked first when the program is running. Only the configuration file that passes the checking can be used to assign values to global variables, thereby ensuring the correctness and stability of the program in subsequent assignment and running processes. In this case, matching files are also checked to avoid incorrect modification of stored configuration files separated from the code.

The variable configuration unit is further configured to encrypt the configuration file. The variable setting unit saves a corresponding secret key in the code. The variable assignment unit obtains the configuration file when the program is run. The configuration file is decrypted according to the saved secret key. By encrypting the configuration file, the security and confidentiality of the configuration file are improved, and the correctness of the program is guaranteed.

The variable configuration unit further includes a visual editing terminal configured to provide a user operation interface for editing configuration data. The variable configuration unit is further configured to generate a binary configuration file by editing the configuration data and convert the configuration file of the binary stream into visual configuration data.

The specific operation process of each unit in the foregoing system can also be obtained according to the description of the foregoing method embodiments, and is not repeated. The connection lines between the units shown in FIG. 3 do not indicate necessary electrical connections, but indicate that the units have a data connection relationship.

In the program implementation method and system by separating code and configuration data provided by the embodiments of the present disclosure, by setting the global variable to the non-constant and configuring global variable data, the global variable is assigned with a value when the program is running, thereby separating the core logic code of the program from the configuration data, and improving the confidentiality of the program code. In addition, in the method and system, respective corresponding configuration files may be used in different construction environments to run programs based on a set of code, thereby improving code generality.

Although the present disclosure is described in detail with reference to the foregoing embodiments, those of ordinary skill in the art should understand that they can still modify the technical solutions described in the foregoing embodiments, or make equivalent substitutions on some technical features therein. These modifications or substitutions do not make the essence of the corresponding technical solutions deviate from the scope of the technical solutions of the embodiments of the present disclosure.

## Claims

1. A program implementation method by separating code and configuration data, comprising:
setting a global variable of a program in interlock logic code to be a non-constant;
storing configuration data corresponding to the global variable in a configuration file, wherein the configuration data comprises station-related information and/or project implementation information;
when executing the program, assigning a value to the global variable according to the configuration data in the configuration file;
in a process of running the program, detecting the global variable, to determine whether the global variable has been changed, so as to ensure that the global variable is not modified during execution, so as to meet interlock function requirement; including:
calculating a check code according to the global variable during initialization of the program and saving the check code; and in the process of running the program, recalculating the check code of the global variable, and comparing the recalculated check code with the saved check code, to determine whether the global variable has been changed.

2. The program implementation method by separating code and configuration data according to claim 1, further comprising: pre-setting a global-variable occupation space.

3. The program implementation method by separating code and configuration data according to claim 2, wherein according to running requirements of the program in different environments, the global-variable occupation space is set to be a maximum space meeting the environment requirements.

4. The program implementation method by separating code and configuration data according to claim 2, wherein the global-variable occupation space is set by setting an internal macro definition in the program.

5. The program implementation method by separating code and configuration data according to claim 1, wherein an global-variable storage region is initialized and partitioned, and a check code of each partition is calculated and saved; and in the process of running the program, a check code of a designated partition of the global variable is recalculated, and the recalculated check code is compared with a corresponding saved check code, to determine whether the global variable has been changed.

6. The program implementation method by separating code and configuration data according to claim 1, wherein the configuration data are stored in the configuration file in a binary stream manner.

7. The program implementation method by separating code and configuration data according to claim 1, comprising: encrypting the configuration file, and saving a corresponding secret key in the code; and obtaining the configuration file when the program is run, and decrypting the configuration file according to the saved secret key.

8. The program implementation method by separating code and configuration data according to claim 1, comprising: storing the configuration data by configuring a sub-partition, wherein the sub-partition comprises a sub-partition length and a sub-partition type field.

9. The program implementation method by separating code and configuration data according to claim 6, comprising: editing, by a visual editing terminal, the configuration data, to generate a binary configuration file, wherein the visual editing terminal is further configured to convert the configuration data of the binary stream into visual configuration data.

10. A program implementation system by separating code and configuration data, configured to carry out the method of any of claims 1 to 9.

## Patentansprüche

1. Programmimplementierungsverfahren durch Trennen von Code und Konfigurationsdaten, umfassend:
Festlegen einer globalen Variablen eines Programms in Verriegelungslogikcode als Nichtkonstante;
Speichern von Konfigurationsdaten, die der globalen Variablen entsprechen, in einer Konfigurationsdatei, wobei die Konfigurationsdaten stationsbezogene Informationen und/oder Projektimplementierungsinformationen umfassen;
wenn das Programm ausgeführt wird, Zuweisen eines Wertes zu der globalen Variablen gemäß den Konfigurationsdaten in der Konfigurationsdatei;
in einem Prozess des Laufens des Programms, Detektieren der globalen Variablen, um zu bestimmen, ob die globale Variable geändert worden ist, um sicherzustellen, dass die globale Variable während Ausführung nicht modifiziert wird, um Verriegelungsfunktionsanforderung zu erfüllen; beinhaltend:
Berechnen eines Prüfcodes gemäß der globalen Variablen während Initialisierung des Programms und Speichern des Prüfcodes; und in dem Prozess des Laufens des Programms Neuberechnen des Prüfcodes der globalen Variablen und Vergleichen des neu berechneten Prüfcodes mit dem gespeicherten Prüfcode, um zu bestimmen, ob die globale Variable geändert worden ist.

2. Programmimplementierungsverfahren durch Trennen von Code und Konfigurationsdaten gemäß Anspruch 1, ferner umfassend: vorab Festlegen eines Belegungsraums der globalen Variablen.

3. Programmimplementierungsverfahren durch Trennen von Code und Konfigurationsdaten gemäß Anspruch 2, wobei gemäß laufenden Anforderungen des Programms in verschiedenen Umgebungen der Belegungsraum der globalen Variablen so festgelegt ist, dass er ein maximaler Raum ist, der die Umgebungsanforderungen erfüllt.

4. Programmimplementierungsverfahren durch Trennen von Code und Konfigurationsdaten gemäß Anspruch 2, wobei der Belegungsraum der globalen Variablen durch Festlegen einer internen Makrodefinition in dem Programm festgelegt wird.

5. Programmimplementierungsverfahren durch Trennen von Code und Konfigurationsdaten gemäß Anspruch 1, wobei eine Speicherregion der globalen Variablen initialisiert und partitioniert wird und ein Prüfcode jeder Partition berechnet und gespeichert wird; und in dem Prozess des Laufens des Programms ein Prüfcode einer bezeichneten Partition der globalen Variablen neu berechnet wird und der neu berechnete Prüfcode mit einem entsprechenden gespeicherten Prüfcode verglichen wird, um zu bestimmen, ob die globale Variable geändert worden ist.

6. Programmimplementierungsverfahren durch Trennen von Code und Konfigurationsdaten gemäß Anspruch 1, wobei die Konfigurationsdaten in der Konfigurationsdatei in einer Binärstromweise gespeichert sind.

7. Programmimplementierungsverfahren durch Trennen von Code und Konfigurationsdaten gemäß Anspruch 1, umfassend: Verschlüsseln der Konfigurationsdatei und Speichern eines entsprechenden geheimen Schlüssels in dem Code; und Erhalten der Konfigurationsdatei, wenn das Programm läuft, und Entschlüsseln der Konfigurationsdatei gemäß dem gespeicherten geheimen Schlüssel.

8. Programmimplementierungsverfahren durch Trennen von Code und Konfigurationsdaten gemäß Anspruch 1, umfassend: Speichern der Konfigurationsdaten durch Konfigurieren einer Teilpartition, wobei die Teilpartition eine Teilpartitionslänge und ein Teilpartitionstypfeld umfasst.

9. Programmimplementierungsverfahren durch Trennen von Code und Konfigurationsdaten gemäß Anspruch 6, umfassend: Bearbeiten, durch ein visuelles Bearbeitungsendgerät, der Konfigurationsdaten, um eine Binärkonfigurationsdatei zu erzeugen, wobei das visuelle Bearbeitungsendgerät ferner dazu konfiguriert ist, die Konfigurationsdaten des Binärstroms in visuelle Konfigurationsdaten umzuwandeln.

10. Programmimplementierungssystem durch Trennen von Code und Konfigurationsdaten, das dazu konfiguriert ist, das Verfahren nach einem der Ansprüche 1 bis 9 durchzuführen.

## Revendications

1. Procédé d'implémentation de programme par séparation de données de code et de configuration, comprenant :
le réglage d'une variable globale d'un programme en code logique de verrouillage pour qu'elle soit non constante ;
le stockage des données de configuration correspondant à la variable globale dans un fichier de configuration, dans lequel les données de configuration comprennent des informations relatives à la station et/ou des informations d'implémentation de projet ;
lors de l'exécution du programme, l'attribution d'une valeur à la variable globale conformément aux données de configuration dans le fichier de configuration ;
dans un processus d'exécution du programme, la détection de la variable globale, pour déterminer si la variable globale a été modifiée, de manière à garantir que la variable globale ne soit pas modifiée pendant l'exécution, de manière à respecter l'exigence de la fonction de verrouillage ;
comprenant :
le calcul d'un code de contrôle selon la variable globale pendant l'initialisation du programme et l'enregistrement du code de contrôle ; et dans le processus d'exécution du programme, le recalcul du code de contrôle de la variable globale, et la comparaison du code de contrôle recalculé au code de contrôle enregistré, pour déterminer si la variable globale a été modifiée.

2. Procédé d'implémentation de programme par séparation de données de code et de configuration selon la revendication 1, comprenant en outre : le préréglage d'un espace d'occupation de variable globale.

3. Procédé d'implémentation de programme par séparation de données de code et de configuration selon la revendication 2, dans lequel selon les exigences d'exécution du programme dans différents environnements, l'espace d'occupation de variable globale est défini pour être un espace maximum respectant les exigences d'environnement.

4. Procédé d'implémentation de programme par séparation de données de code et de configuration selon la revendication 2, dans lequel l'espace d'occupation de variable globale est réglé par le réglage d'une macrodéfinition interne dans le programme.

5. Procédé d'implémentation de programme par séparation de données de code et de configuration selon la revendication 1, dans lequel une région de stockage de variable globale est initialisée et partitionnée, et un code de contrôle de chaque partition est calculé et enregistré ; et dans le processus d'exécution du programme, un code de contrôle d'une partition désignée de la variable globale est recalculé, et le code de contrôle recalculé est comparé à un code de contrôle enregistré correspondant, pour déterminer si la variable globale a été modifiée.

6. Procédé d'implémentation de programme par séparation de données de code et de configuration selon la revendication 1, dans lequel les données de configuration sont stockées dans le fichier de configuration d'une manière de flux binaire.

7. Procédé d'implémentation de programme par séparation de données de code et de configuration selon la revendication 1, comprenant : le cryptage du fichier de configuration, et l'enregistrement d'une clé secrète correspondante dans le code ; et l'obtention du fichier de configuration lorsque le programme est exécuté, et le décryptage du fichier de configuration selon la clé secrète enregistrée.

8. Procédé d'implémentation de programme par séparation de données de code et de configuration selon la revendication 1, comprenant : le stockage des données de configuration par configuration d'une sous-partition, dans lequel la sous-partition comprend une longueur de sous-partition et un champ de type de sous-partition.

9. Procédé d'implémentation de programme par séparation de données de code et de configuration selon la revendication 6, comprenant : l'édition, par un terminal d'édition visuelle, des données de configuration, pour générer un fichier de configuration binaire, dans lequel le terminal d'édition visuelle est en outre configuré pour convertir les données de configuration du flux binaire en données de configuration visuelle.

10. Système d'implémentation de programme par séparation de données de code et de configuration, configuré pour mettre en œuvre le procédé selon l'une quelconque des revendications 1 à 9.
